# EUROPÄISCHE PATENTSCHRIFT

(11) **EP 1 520 888 B1**
(45) Veröffentlichungstag und Bekanntmachung des Hinweises auf die Patenterteilung: **30.04.2008**
(21) Anmeldenummer: 04022582.3
(22) Anmeldetag: 22.09.2004
(51) Int. Cl.: C09D 167/00

(54) **Wässrige Beschichtungsmittel für Can Coating**
Aqueous can coating composition
Compositions aqueuses pour revêtement de boîtes

(30) Priorität: 02.10.2003 DE 10345788
(43) Veröffentlichungstag der Anmeldung: 06.04.2005
(73) Patentinhaber: Bayer MaterialScience AG, 51368 Leverkusen (DE)
(72) Erfinder: Wamprecht, Christian, Dr., 41472 Neuss (DE); Baumbach, Beate, Dr., 51399 Burscheid (DE); Küttner, Wolfram, 51467 Bergisch Gladbach (DE)

(56) Entgegenhaltungen:
- EP-A- 0 062 786

## Beschreibung

Die vorliegende Erfindung betrifft neue wässrige Beschichtungsmittel für die Beschichtung von Metallsubstraten, wie z.B. Dosen, die insbesondere den Anforderungen aus dem Lebensmittelbereich genügen und ein Verfahren zu ihrer Herstellung.

Zur Herstellung von Behältern, wie z.B. Dosen für den Einsatz als Verpackungsmaterial, insbesondere für die Verpackung von Lebensmitteln, werden typischerweise Bleche aus Weißblech, chromatiertem Stahl und Aluminium in Tafel- oder Bandform beschichtet. Durch diese Beschichtung wird der Kontakt zwischen Füllgut und Metall verhindert, so dass eine Korrosion des Metalls oder jegliche Einwirkung des Metalls auf die Produktqualität ausgeschlossen wird. Selbstverständlich darf es auch nicht durch die Lackschicht selbst, z.B. durch herausgelöste Lackbestandteile, zu einer Beeinflussung bzw. Beeinträchtigung des Füllgutes kommen. Daher werden an Beschichtungsmittel bzw. Beschichtungen für Can Coating sehr hohe Anforderungen in Bezug auf Flexibilität, Lösemittel- und Chemikalienbeständigkeit sowie toxische Bestandteile gestellt.

Typischerweise werden die sogenannten Goldlacke auf Basis von hochmolekularen Epoxidharzen und Phenolharzen vom Resoltyp, die teilverethert oder andersartig plastifiziert sind, als Blechemballagen-Innenschutzlacke eingesetzt. Dabei ist es möglich, mehrere Lackschichten, auch auf anderer Harzbasis, zu applizieren. Dies ist z.B. notwendig, wenn ein besonders hochwertiger Korrosionsschutz in Verbindung mit einer kritischen Blechverformung und/oder eine besonders lange Lagerzeit gefüllter Dosen gefordert wird.

Ebenfalls finden Epoxid-Aminharz-Lacke Anwendung, die jedoch eine größere Empfindlichkeit gegenüber ungünstigen Blechoberflächen sowie eine geringere Beständigkeit gegenüber sauren Füllgütern aufweisen.

Lacke auf Basis von Vinylchlorid-Copolymerisaten, bei denen besonders Geschmacksfreiheit und Porenarmut hervorzuheben sind, werden u.a. als Innenschutz für Getränkedosen verwendet. Auch PVC-Organosole finden Anwendung, insbesondere für Aufreißdeckel aus Aluminium und aus Weißblech, wobei hier der erzielbare hohe Festkörpergehalt sowie die gute Filmelastizität, selbst bei dickerem Lackauftrag, Beachtung verdienen.

Zum Stand der Technik, beschrieben in "Internal Lacquers of metallic food containers", K. R: Kumar, in Popular Plastics & Packaging, 8/2001, Seiten 66-70, gehört die Verwendung von Beschichtungsmitteln auf Basis von Epoxyharzen und Phenolharzhärtern.

Auch die WO 88/01287 und US-B 4 018 848 offenbaren Beschichtungsmittel auf Basis von Epoxyharzen und Phenolharzhärtern für die Beschichtung von Metallbändern für die Herstellung von Metalldosen für Lebensmittel. Diese Beschichtungen zeichnen sich durch eine besonders gute Beständigkeit gegenüber aggressiven Produkten, gute mechanische Eigenschaften, wie z.B. hohe Elastizität, und eine sehr gute Metallhaftung aus. Allerdings enthalten nahezu alle diese Beschichtungsmittel organische Lösungsmittel, z.B. Aromatengemische wie z.B. Solvesso^{®} 100, 150 oder 200. Die verwendeten Epoxyharze enthalten fast alle 2,2'-Bis(4-hydroxyphenyl)propan-bis(2,3-epoxypropyl)-ether (oder dessen Homologe), auch bekannt als Bisphenol-A-Diglycidylether oder "BADGE" (Bisphenol-A-Di-Glycidyl-Ether).

Bisphenol A (BPA), die Vorstufe von "BADGE", ist für seinen Einfluss auf das endocrine System bekannt. Es ist ferner bekannt, dass "BADGE" in in-vitro Tests mutagen wirksam ist und geringe Mengen dieser Substanz in die verpackten Nahrungsmittel übergehen können. Weiterhin steht "BADGE" im Verdacht, cancerogene Wirkung zu besitzen. Daher ist es vorteilhaft, BADGE-freie Beschichtungsmittel für die Innenbeschichtung von Dosen mit Nahrungsmittelkontakt einzusetzen.

"BADGE"-freie Beschichtungen sind beispielsweise in DE-A 199 12 794 und EP-A 1 277 814 beschrieben. Diese basieren allerdings auf lösemittelhaltigen Beschichtungsmitteln mit beträchtlichem Lösemittelanteil (bis zu 90 Gew.-%), welche aus Emissionsgründen heutzutage unerwünscht sind. Des weiteren können in den Beschichtungen verbleibende Lösemittelreste durch Migration zur Beeinträchtigung des Füllguts führen.

**In der** EP-A 062786 **werden phenolharzmodifizierte Bindemittel offenbart, die sich zur Herstellung von Emballagenlacken oder Konservendosenlacken eignen. Nachteilig an diesen Beschichtungsmitteln ist jedoch, dass diese unerwünschte Nebenprodukte enthalten, die die Qualität der Beschichtung deutlich vermindern und den hohen FDA-Anforderungen an eine Lebensmitteltauelichkeit nicht mehr genügen.**

Wässrige Beschichtungsmittel für Can Coating Anwendungen sind bekannt, jedoch enthalten diese entweder blockierte Polyisocyanate als Vernetzer oder Bindemittel, die aus Komponenten aufgebaut sind, die nicht dem § 175300 des USA Code of Federal Regulations Nr. 21, FDA (Food and Drug Administration) entsprechen.

Blockierte Polyisocyanate spalten beim Einbrennvorgang das entsprechende Blockierungsmittel, z.B. Butanonoxim oder ε-Caprolactam, ab. Diese Abspalter können jedoch teilweise noch in der Lackschicht verbleiben und so in das spätere Füllgut migrieren. Daher sind solche Systeme für die Anwendung im Lebensmittelbereich bisher nicht geeignet.

Aufgabe der vorliegenden Erfindung war es daher, "BADGE"-freie wässrige Beschichtungsmittel bereitzustellen, die nach Paragraph 175300, USA Code of Federal Regulations Nr. 21, FDA-kon form sind, höchstens 20 Gew.-% organische Lösemittel enthalten sowie in ausgehärtetem Zustand sehr gute mechanische Eigenschaften, wie hohe Elastizität, ein hohes Beständigkeitsniveau gegen Lösemittel, Chemikalien sowie fettige und ölige Substanzen, besitzen und gleichzeitig eine hohe Resistenz bei thermischer Beanspruchung aufweisen.

FDA-konform in diesem Zusammenhang bedeutet, dass ausschließlich Komponenten in den Bindemittelzusammensetzungen bzw. bei deren Herstellung verwendet werden, die gemäß § 175300 in USA Code of Federal Regulations Nr. 21 (FDA) gelistet sind.

Diese zugrundeliegende Aufgabe konnte durch die nachstehend beschriebenen Beschichtungsmittel gelöst werden.

Gegenstand der Erfindung sind daher wässrige Beschichtungsmittel, enthaltend
A) ein oder mehrere wasserverdünnbare Polyesterpolyole mit einer OH-Zahl von 20 bis 300 mg KOH/g und einer Säurezahl von 20 bis 80 mg KOH/g erhältlich durch Umsetzung von
   a) 49 bis 40 Mol-% einer Carbonsäurekomponente enthaltend
      a1) eine oder mehrere aliphatische, cycloaliphatische, araliphatische und/oder aromatische Carbonsäuren einer COOH-Funktionalität ≥ 2 oder deren Anhydride und
      a2) gegebenenfalls aromatische, cycloaliphatische und/oder aliphatische Monocarbonsäuren
      mit
   b) 51 bis 60 Mol-% einer Alkoholkomponente enthaltend
      b1) ein oder mehrere aliphatische, cycloaliphatische und/oder araliphatische Polyole eines zahlenmittleren Molekulargewichts von 62 bis 272 g/mol sowie einer mittleren OH-Funktionalität ≥ 2 und
      b2) gegebenenfalls aliphatische, cycloaliphatische und/oder araliphatische Monoalkohole,
B) einen oder mehrere gegenüber OH-Gruppen reaktive Vernetzer, ausgewählt aus der Gruppe bestehend aus Phenolharzen, Aminoplastharzen, Benzguanidinharzen und/oder Harnstoffharzen mit jeweils einer Funktionalität (bezogen auf OH-reaktive Gruppen) von ≥ 2,
C) Wasser
D) Neutralisationsmitteln und
E) optional Lösemitteln, Hilfs- und Zusatzstoffen,
sowie ein Verfahren zu deren Herstellung durch Vermischen der Einzelkomponenten A) - E) miteinander, wobei zunächst A), ggf. in Anwesenheit von C) mit D), ganz oder teilweise neutralisiert wird, bevor die Komponenten B), E) sowie restliche Mengen C) und D) zugegeben werden.

In der Komponente a1) werden als aromatische Di- oder Polycarbonsäure bzw. -anhydride bevorzugt Phthalsäure, Isophthalsäure, Terephthalsäure, Trimellitsäure, Phthalsäureanhydrid, Trimellitsäureanhydrid und/oder Pyromellitsäureanhydrid, besonders bevorzugt Phtalsäureanhydrid, Terephthalsäure und/oder Isophthalsäure, ganz besonders bevorzugt Phtalsäureanhydrid und/oder Terephthalsäure eingesetzt.

Als aliphatische Di- oder Polycarbonsäuren werden in a1) bevorzugt Bernsteinsäure, Maleinsäure, Adipinsäure, Sebacinsäure, Dodecandisäure, dimerisierte Fettsäuren, Bernsteinsäureanhydrid und/oder Maleinsäureanhydrid, besonders bevorzugt Bernsteinsäureanhydrid, Maleinsäureanhydrid und/oder Adipinsäure, ganz besonders bevorzugt Adipinsäure und/oder Maleinsäureanhydrid eingesetzt.

Als cycloaliphatische Di- oder Polycarbonsäuren werden in a1) bevorzugt 1,4-Cyclohexandicarbonsäure, Hexahydrophthalsäure und/oder Hexahydrophthalsäureanhydrid, besonders bevorzugt 1,4-Cyclohexandicarbonsäure und/oder Hexahydrophthalsäureanhydrid, ganz besonders bevorzugt 1,4-Cyclohexandicarbonsäure eingesetzt.

In der Komponente a2) werden bevorzugt als Monocarbonsäuren Essigsäure, Propionsäure, 1-Octansäure, 1-Decansäure, 1-Dodecansäure, 1-Octadecansäure, gesättigte und ungesättigte Fettsäuren und/oder Benzoesäure, besonders bevorzugt 1-Dodecansäure, 1-Octadecansäure, gesättigte und ungesättigte Fettsäuren und/oder Benzoesäure, ganz besonders bevorzugt gesättigte und ungesättigte Fettsäuren und/oder Benzoesäure eingesetzt.

In der Komponente b1) werden als aliphatische Polyole bevorzugt Ethylenglykol, Diethylenglykol, Triethylenglykol, 1,2-Propandiol, 1,4-Butandiol, Neopentylglycol, 1,6-Hexandiol, Glycerin, Trimethylolpropan, Pentaerythrit und/oder Sorbit, besonders bevorzugt Ethylenglykol, Diethylenglykol, 1,2-Propandiol, 1,6-Hexandiol, Glycerin und/oder Trimethylolpropan, ganz besonders bevorzugt Ethylenglykol, Diethylenglykol, 1,2-Propandiol und/oder Trimethylolpropan eingesetzt.

In der Komponente b2) werden als Monoalkohole bevorzugt Methanol, Ethanol, 1-Propanol, 1-Butanol, 2-Butanol, Isobutanol, 1-Pentanol, 1-Hexanol, 2-Ethylhexanol, 1-Octanol, 1-Decanol, 1-Dodecanol, Butylglykol, und/oder Butyldiglykol, besonders bevorzugt 2-Ethylhexanol, 1-Decanol, 1-Dodecanol, Cyclohexanol, Butylglykol und/oder Butyldiglykol, ganz besonders bevorzugt 2-Ethylhexanol, Cyclohexanol, Butylglykol und/oder Butyldiglykol eingesetzt.

Die genannten Verbindungen der Komponenten a1), a2), b1) und b2) können jeweils einzeln oder in beliebigen Mischungen untereinander in den jeweiligen Komponenten eingesetzt werden.

Die Herstellung der erfindungswesentlichen Polyesterpolyole der Komponente A1) erfolgt in an sich bekannter Weise nach Methoden, wie sie beispielsweise in "Ullmanns Encyclopädie der Technischen Chemie", Verlag Chemie Weinheim, 4. Auflage (1980) 'Band 19, Seiten 61 ff. oder von H. Wagner und H. F. Sarx in "Lackkunstharze", Carl Hanser Verlag, München (1971), Seiten 86 bis 152 ausführlich beschrieben sind.

Die Herstellung wird bevorzugt in der Schmelze, gegebenenfalls in Gegenwart einer katalytischen Menge eines üblichen Veresterungskatalysators, wie z.B. Säuren, Basen oder Übergangsmetallverbindungen, wie z.B. Titantetrabutylat, Dibutylzinnoxid oder Butylzinnsäure, bei Temperaturen von 80 bis 270°C, bevorzugt von 100 bis 250°C, unter Stickstoffatmosphäre durchgerührt. Dabei dient der Stickstoffstrom auch dazu, das entstehende Reaktionswasser zu entfernen. Das Entfernen des Reaktionswassers kann jedoch auch durch Anlegen eines Vakuums von bevorzugt bis zu 0,1 mbar erfolgen. Gegebenenfalls kann auch ein Schleppmittel, wie z.B. Xylol, zum Austragen des Reaktionswassers zugegeben werden. Die Veresterungsreaktion wird so lange durchgeführt, bis die angestrebten Werte für die Hydroxyl- und Säurezahl sowie für die Viskosität erreicht sind. In einer bevorzugten Ausführungsform der Erfindung wird zunächst ein OH-funktionelles Polyesterpolyol hergestellt, das keine bzw. nur geringe Mengen an freien Carbonsäure- und/oder Carboxylatfunktionen aufweist, welches dann in einem nachfolgenden Schritt mit einem cyclischen Dicarbonsäureanhydrid, wie z.B. Phthalsäureanhydrid, unter Ringöffnung und Halbesterbildung umgesetzt wird, wobei dann freie Carbonsäure- und/oder Carboxylatgruppen entstehen.

Die gewichtsmittleren Molekulargewichte M_{w} der erfindungswesentlichen, wasserverdünnbaren Polyesterpolyole der Komponente A) liegen bei > 3.000 g/mol, bevorzugt > 7.500 g/mol, besonders bevorzugt > 10.000 g/mol und ganz besonders bevorzugt zwischen 10.000 und 30.000 g/mol, insbesondere zwische3n 10.000 und 20.000 g/mol.

Die OH-Zahlen der erfindungswesentlichen, wasserverdünnbaren Polyesterpolyole A) liegen im Bereich von 20 bis 300 mg KOH/g, vorzugsweise 25 bis 200 mg KOH/g, besonders bevorzugt bei 30 bis 150 mg KOH/g und ganz besonders bevorzugt bei 35 bis 100 mg KOH/g, bezogen auf Festharz.

Die Säurezahlen der wasserverdünnbaren Polyesterpolyole A) liegen im Bereich von 20 bis 80 mg KOH/g, vorzugsweise 25 bis 75 mg KOH/g, besonders bevorzugt bei 30 bis 70 mg KOH/g und ganz besonders bevorzugt bei 40 bis 60 mg KOH/g, bezogen auf Festharz.

Als Verbindungen der Komponente B) sind die Phenolharze, Uravar SFC 112^{®} (nicht plastifiziertes Phenolharz der Firma DSM Coatings Resin, Zwolle, NL), Uravar FB 209 57 BT^{®} (butyliertes Phenolharz der Firma DSM Coatings Resin, Zwolle, NL), Uravar FB 190^{®} bzw. SFC 138^{®} (verethertes Phenolharze der Firma DSM Coatings Resin, Zwolle, NL) und Bakelite 9610 LW^{®} (modifiziertes Resol-Phenolharz der Firma Bakelite AG, Iserlohn, DE) bevorzugt.

Als Verbindungen der Komponente B) sind die Melaminharze, Cymel^{®} 303 (Cytec Netherlands, Botlek, NL) und Maprenal^{®} MF 900 (UCB Surface Specialties, Brussels, BE) bevorzugt.

Als Verbindungen der Komponente B) sind die Benzguanidinharze, Cymel^{®} 1123 (Cytec Netherlands, Botlek, NL) und Maprenal^{®} MF 980 (UCB Surface Specialties, Brussels, BE) bevorzugt.

Als Verbindungen der Komponente B) sind die Harnstoffharze, UFR^{®} 80 (Cytec Netherlands, Botlek, NL) und Viamin^{®} (UCB Surface Specialties, Brussels, BE) bevorzugt.

Besonders bevorzugt ist die alleinige Verwendung von Melaminharzen als Vernetzerkomponente B), ganz besonders bevorzugt solche der vorstehend genannten Art.

Geeignete Neutralisationsmittel der Komponente D) zur Neutralisation der Carbonsäuregruppen der Polyesterpolyole aus A) sind sowohl anorganische als auch organische Basen. Bevorzugt werden primäre, sekundäre und tertiäre Amine und Ammoniak, besonders bevorzugt tertiäre Amine, wie z.B. Triethylamin, Tributylamin, N-Methyldiethanolamin, N,N-Dimethylethanolamin, N,N-Diethylethanolamin, Triethanolamin, Triisopropylamin und Triisopropanolamin eingesetzt. Ganz besonders bevorzugt sind N,N-Dimethylethanolamin, Triethanolamin und Triethylamin.

Bestandteile der Komponente E) sind beispielsweise Entschäumer, Verdicker, Verlaufsmittel, Pigmente, Füllstoffe, Emulgatoren, Dispergierhilfsmittel, Lichtschutzmittel und auch Lösemittel.

Die gewünschte Verarbeitungsviskosität wird in aller Regel durch die Zugabe organischer Lösemittel oder Wasser, vorzugsweise Wasser, eingestellt.

Um ganz bestimmte Verarbeitungsviskositäten einzustellen oder besondere rheologische Eigenschaften zu erzielen, ist es auch möglich, Verdickungsmittel oder Kombinationen von verschiedenen Verdickungsmitteln, z.B. ionische und assoziative Verdicker, einzusetzen.

Um die Polyester der Komponente A) wasserverdünnbar zu machen müssen die enthaltenen Carbonsäuregruppen mit einem Neutralisationsmittel vollständig oder teilweise neutralisiert werden. Dabei kann das Neutralisationsmittel D) vor, während oder nach der Überführung des erfindungsgemäßen Esters in die wässrige Phase zugegeben werden, wobei eine Neutralisation vor der Überführung in die wässrige Phase bevorzugt ist.

Üblicherweise beträgt die dazu verwendete Menge der Komponente D) 0,4 bis 1,5 Mol, bevorzugt von 0,5 bis 1,4 Mol und besonders bevorzugt 0,6 bis 1,3 Mol, bezogen auf alle in A) rechnerisch vorhandenen COOH-Funktionen.

Zur Überführung der Polyesterpolyole der Komponente A) in die wässrige Phase werden diese, gegebenenfalls unter starker Scherung, wie z.B. starkem Rühren, entweder in das Dispergierwasser C) eingetragen oder man rührt umgekehrt das Dispergierwasser C) zu dem/den Polyesterpolyol(en). Es ist dabei oft vorteilhaft, dem Polyesterpolyol vor dem Dispergiervorgang wasserverdünnbare organische Lösungsmittel der Komponente E) zuzusetzen, die quasi als Hilfs- oder Colöser dienen. Solche Lösemittel sind beispielsweise Butylglykol oder Butyldiglykol.

Das Mengenverhältnis der Komponenten A) und B) liegt üblicherweise zwischen 99 : 1 bis 50 : 50 Gew.-%, vorzugsweise zwischen 99 : 1 bis 65 : 35 Gew.-% und ganz besonders bevorzugt zwischen 99 : 1 bis 80 : 20 Gew.-% bezogen auf Lieferformen.

Bevorzugt wird bei dem erfindungsgemäßen Verfahren zunächst die Komponente A) aus wasserverdünnbaren Polyesterpolyolen mit der Komponente D) neutralisiert und das resultierende Gemisch anschließend gegebenenfalls unter starker Scherung mit Wasser C) vermischt, wobei eine wässrige Polyesterdispersion bzw. -Lösung erhalten wird. Anschließend werden die Vernetzerkomponente B) und optional Lösemittel und Hilfs- und Zusatzstoffe der Komponente E) eingerührt oder einemulgiert.

Ein weiterer Gegenstand der Erfindung sind Beschichtungen und beschichtete Substrate, die unter Verwendung der erfindungsgemäßen Beschichtungsmittel hergestellt wurden.

Bevorzugte Substrate zur Beschichtung mit den erfindungsgemäßen Beschichtungsmitteln sind Metalle, wie sie üblicherweise zur Herstellung von Containern, Behältern und Dosen für Lebensmittelkontakt dienen.

Bevorzugt erfolgt die Substratbeschichtung mit den erfindungsgemäßen Beschichtungsmitteln nach dem Bandlackierverfahren.

Die Trocknung und Aushärtung der Beschichtungen erfolgt im allgemeinen unter Einbrennbedingungen bis 270°C, vorzugsweise bis 240°C und besonders bevorzugt bis 200°C.

Die so erhaltenen Substratbeschichtungen zeichnen sich durch eine besonders gute Metallhaftung, eine hohe Härte und zugleich besonders gute Elastizität aus, was an sich gegensätzliche Eigenschaften sind. Weiterhin besitzen die Beschichtungen eine sehr hohe Beständigkeit gegen Lösemittel, Chemikalien und Wasser und weisen eine gute Sterilisationsfestigkeit, einen gutem Verlauf sowie einen hohem Glanz auf. Sie sind frei von "BADGE" und sehr gut geeignet als Beschichtung von Dosen mit Lebensmittelkontakt.

### Beispiele

In den folgenden Beispielen beziehen sich alle Prozentangaben auf das Gewicht.

Als Kenndaten wurden der Festgehalt (Dickschichtmethode: Deckel, 1g Probe, 1h 125°C, Konvektionsofen, Grundlage DIN EN ISO 3251), die Säurezahl (mg KOH/g Probe, Titration mit 0,1 mol/l NaOH-Lösung, Grundlage DIN 53402), die Viskosität (Rotationsviskosimeter VT 550 der Firma Haake GmbH, Karlsruhe, DE, MV-DIN Becher bei Viskosität < 10.000 mPas/23°C), die OH-Zahl (mg KOH/g Probe, Acetylierung, Hydrolyse, Titration mit 0,1 mol/l NaOH, Grundlage DIN 53240) und die Hazen-Farbzahl (Hazen-Farbzahl nach DIN 53995, Farbzahlmessgerät Lico^{®} 400, Dr. Lange GmbH, Berlin, DE) bestimmt. Die Säure- und OH-Zahl werden sowohl für die Lieferform (Lff.) und für das Festharz (FH) angegeben. Der OH-Gehalt kann aus der OH-Zahl mittels Division durch 33 errechnet werden.

Als Additive und Bindemittel wurden verwendet:
- Byk 301^{®} : Verlaufsmittel, 52%ig in 2-Butoxyethanol, Byk Chemie, Wesel, DE.
- Cymel 303^{®}: Melaminharzvernetzer, lösemittelfrei, Cytec Netherlands, Botlek, NL.
- Epikote^{®} 1007: Epoxidharz, lösemittelfrei, Resolution Performance Products, 3190 AN Hoogvliet Rt, NL.
- SFC 112^{®}, nicht verethertes Phenolharz, 72%ig in 1-Butanol, DSM Coating Resins, Zwolle, NL.
- Uravar FB 209^{®} BT-57: Butyliertes Phenolharz 57%ig in 1-Butanol/Toluol 4: 1, DSM Coating Resins, Zwolle, NL.
- Additol XK 406^{®} : Phenolharz, 8%ig in Petroleum/Xylol/1-Butanol/ Phosphorsäure/Wasser 16,5:12.5:12:4:1, UCB Surface Specialties, Brussels, BE.

### Beispiel 1:

### Herstellung eines wasserverdünnbaren Polyesterpolyols A1)

4418 g Diethylenglykol und 1596 g Trimethylolpropan wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 120°C aufgeheizt. Dann wurden 682 g Adipinsäure, 2717 g Terephthalsäure und 3806 g Phthalsäureanhydrid zugegeben und die Mischung so auf 230°C aufgeheizt, dass die Kopftemperatur an der Kolonne 103°C nicht überstieg. Dabei schied sich das Reaktionswasser ab. Es wurde bis zu einer Harzviskosität von 85 bis 90 Sekunden (Auslaufzeit aus einem DIN-4-mm Becher bei 23°C, 55%ig gelöst in Methoxypropylacetat) kondensiert. Dann wurde auf 140°C abgekühlt. Bis zu diesem Zeitpunkt der Reaktion wurden 1428 g Harz für Proben entnommen. Zum restlichen Kesselinhalt wurden 1428 g Phthalsäureanhydrid gegeben und so lange bei 140°C gerührt, bis eine Harzviskosität von 88 bis 92 Sekunden (Auslaufzeit aus einem DIN-4-mm Becher bei 23°C, 50%ig gelöst in Methoxypropylacetat) erreicht war. Es wurden danach insgesamt 2550 g Harz (einschließlich der gezogenen Proben) entnommen, dann 4050 g Butylglykol zugegeben und unter Rühren 2 Stunden bei 100°C eingelöst. Anschließend wurde auf 60°C abgekühlt und der Kesselinhalt filtriert. Es resultierte eine Lösung mit einem Feststoffgehalt von 70,4 Gew.-%, einer Säurezahl von 37 mg KOH/g, einer OH-Zahl von 47 mg KOH/g (bezogen auf Festharz), einer Hazen-Farbzahl von 43 APHA und einer Viskosität von 12.516 mPa·s bei 23°C.

### Beispiel 2:

### Herstellung eines wasserverdünnbaren Polyesterpolyols A2)

4023 g Diethylenglykol und 1453 g Trimethylolpropan wurden zusammen in einen 15 Liter-Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff auf 120°C aufgeheizt. Dann wurden 3174 g Terephthalsäure und 3458 g Phthalsäureanhydrid zugegeben und die Mischung so auf 230°C aufgeheizt, dass die Kopftemperatur an der Kolonne 103°C nicht überstieg. Dabei schied sich das Reaktionswasser ab. Es wurde bis zu einer Säurezahl von < 5mg KOH/g kondensiert. Dann wurde auf 140°C abgekühlt. Es wurden dann insgesamt 1309 g Harz (einschließlich der gezogenen Proben) entnommen. Zum restlichen Kesselinhalt wurden 1309 g Phthalsäureanhydrid gegeben und so lange bei 140°C gerührt, bis eine Säurezahl von 45 bis 50 mg KOH/g erreicht war. Es wurden danach insgesamt 1550 g Harz (einschließlich der gezogenen Proben) entnommen, dann 4050 g Butylglykol zugegeben und unter Rühren 2 Stunden bei 100°C eingelöst. Anschließend wurde auf 60°C abgekühlt und der Kesselinhalt filtriert. Es resultierten 13500 g einer Polyesterlösung mit einem Feststoffgehalt von 70,2 Gew.-%, einer Säurezahl von 33,5 mg KOH/g, einer OH-Zahl von 75 mg KOH/g (bezogen auf Festharz), einer Hazen-Farbzahl von 50 APHA und einer Viskosität von 5370 mPa·s.

**Beispiel 3:** (Vergleich; Nachstellung Beispiel II, Seite 6 der EP-A 1 277 814)

Beispiel II der EP-A 1 277 814 wurde mit den angegebenen Rohstoffen und Mengenverhältnissen nachgestellt. Da keine Veresterungstemperatur angegeben ist wurde eine für Veresterungen typische Reaktionstemperatur von 230°C gewählt. Es resultierte ein gelbliches Harz mit einem Festgehalt von 40,7 Gew.-%, einer Säurezahl von 0,73 mg KOH/g und einer Viskosität von 45.000 mPas (23°C).

### Beispiel 4: Lacke und lacktechnische Prüfungen

Die wasserverdünnbaren Polyester gemäß Beispiel 1 und 2 wurden mit so viel N,N-Dimethyl-etanolamin versetzt, dass ein Neutralisationsgrad von 120 % resultierte. Dann wurden unter intensivem Rühren Wasser, Vernetzer B) und Additive E) bei Raumtemperatur zugegeben (Beispiele 4a und 4b). Zum Vergleich wurden ein handelsübliches Beschichtungsmittel auf Basis eines Epoxy- und Phenolharzes als V1 und ein Beschichtungsmittel auf Basis des obigen Beispiels 3 gemäß der Rezeptur von Experiment II Seiten 7 + 8 der EP-A 1 277 814 als V2 geprüft.

Die einzelnen Mengenverhältnisse der hergestellten und geprüften Lacke sind in der nachfolgenden Tabelle 1 aufgeführt.

| Komponenten | 4a | 4b | V1 | V2 |
|---|---|---|---|---|
| Polyester A 1 | 52,84 g | | | |
| Polyester A2 | | 52,84 g | | |
| Polyol aus Beispiel 3 | | | | 61,50 g |
| Wasser | 41,65 | 41,65 | | |
| Cymel^{®} 303 | 3,09 g | 3,09 g | | |
| Byk^{®} 301 | 0,16 g | 0,16 g | | |
| Formaldehyd/Phenolharz¹⁾ | | | 13,80 g | |
| Epikote^{®} 1007 | | | 82,90 g | |
| H₃PO₄, 10 %ig in 1-Butanol | | | 3,30 g | |
| SFC^{®} 112 | | | | 12,60 g |
| Uravar^{®} FB 209 | | | | 2,80 g |
| Additol^{®} XK 406 | | | | 0,30 g |
| DBE-Ester (Dibasic ester)²⁾ | | | | 11,80 g |
| Verdünner³⁾ | | | | 11,00 g |

| | | | | |
|---|---|---|---|---|
| ¹⁾ Resistherm LVP BBB 2036, Bayer AG Leverkusen, DE ²⁾ INVISTA Germany DuPont Textiles & Interiors GmbH, Bad Homburg v.d.H, DE. ³⁾ Mischung aus 334 Gew.-Teile Dowanol PM (Dow Chemical, Stade, DE), 65 Gew.-Teile Butylacetat, 460 Gew.-Teile Solvesso 150 (Esso AG, Köln, DE) und 140 Gew.-Teile Butylglycol. | | | | |

Die vorstehend beschriebenen Klarlacke wurden auf Weißblechplatten T1 (Rasselstein Hoesch, Andernach, DE) mit einem handelsüblichen Rakel appliziert und für 10 Minuten bei 180°C im Umluftofen eingebrannt. Es ergaben sich Trockenfilmschichtstärken von 8 - 10 µm.

Folgende lacktechnische Eigenschaften wurden ermittelt:

| Test | 4a | 4b | V1 | V2 |
|---|---|---|---|---|
| Haftung Gitterschnitt^{a)} | 0 | 0 | 0-1 | 0-1 |
| Schlagbiegeprüfung^{b)} | 65 | 52 | 27 | 90 |
| Tiefzug/Rundnäpfchen^{c)} | 0 | 0 | 0 | 0 |
| Stapelfestigkeit^{d)} | 0 | 0 | 0 | 0 |
| MEK-Wischtest^{e)} | 80 | 70 | > 100 | 30 |
| Sterilisation^{f)} | 2 | 2 | 0-1 | 2-3 |

| | | | | |
|---|---|---|---|---|
| ^{a)} Haftung Gitterschnitt (nach DIN 53151) Bewertung: 0= gut, 5= schlecht. ^{b)} Erichsen Schlagfaltprüfgerät Typ 471 (Prüfmaschine Erichsen GmbH & Co KG, Hemer, DE), Schlaghammer 2300 g, Fallhöhe 650 mm, Angabe der Risslänge in mm. ^{c)} Erichsen Tiefzieh-Näpfchen-Prüfmaschine (Erichsen GmbH & Co KG, Hemer, DE), Bewertung nach DIN 53230. ^{d)} Je 2 beschichtete Platten wurden mit den lackierten Seiten gegeneinander gestapelt. Zwischen die beschichteten Platten wurde ein Schwarzbandfilter gelegt. Der Stapel wurde anschließend mit einer Stahlplatte zur besseren Gewichtsverteilung und einem 5 kg Gewicht belastet und 16 h bei 50°C gelagert. Nach Lagerung wurden etwaige Beschädigungen des Films (wie Abdruckspuren des Filterpapiers) visuell abgemustert; Bewertung: 0= gut, 5= schlecht. ^{e)} Ein mit Methylethylketon (MEK) getränkter Wattebausch wurde mit einem konstanten Druck auf dem Lackfilm 100 mal hin und her bewegt (100 Doppelhübe). Falls bei weniger als 100 Doppelhüben bereits starke Beschädigung oder Ablösung zu beobachten war, wurde der Test abgebrochen. Anschließend wurden die Platten visuell auf Trübung und/oder Filmablösung beurteilt. ^{f)} Ausgehärtete Beschichtungen wurden in einem Sterilisator (Aesculap JA 154, Aesculap AG, Tuttlingen, DE), 2 h bei 1,2 bar/121°C behandelt und anschließend erfolgte Untersuchung der Beschichtung wird auf Haftungsverlust (Strippen), Glanzverlust, Wasserflecken, Blasenbildung; Bewertung: 0=gut, 5= schlecht | | | | |

### Diskussion der Ergebnisse:

Mit den wässrigen Lacken der Beispiele 1 und 2 (Beispiele 4a und 4b) und dem konventionellen Lack V1 lassen sich Beschichtungen mit hervorragender Haftung, sehr gutem Tiefzug und sehr guter Stapelfestigkeit herstellen. Die Lösemittelbeständigkeit, Sterilisationsfestigkeit und die Elastizität des konventionellen Lacks ist etwas besser als die der erfindungsgemäßen wässrigen Lacke. Die erfindungsgemäßen Lacke sind gegenüber dem Vergleich 1 jedoch völlig frei von Bisphenol-A-diglycidylether-Rückständen und haben einen deutlich geringeren Anteil an organischen Lösemitteln. Der Vergleichslack V2 hat dagegen eine deutlich schlechtere Lösemittelbeständigkeit und Elastizität und einen hohen Lösemittelanteil.

## Patentansprüche

1. Wässrige Beschichtungsmittel, enthaltend
A) ein oder mehrere wasserverdünnbare Polyesterpolyole mit einer OH-Zahl von 20 bis 300 mg KOH/g und einer Säurezahl von 20 bis 80 mg KOH/g erhältlich durch Umsetzung von
a) 49 bis 40 Mol-% einer Carbonsäurekomponente enthaltend
a1) eine oder mehrere aliphatische, cycloaliphatische, araliphatische und/oder aromatische Carbonsäuren einer COOH-Funktionalität ≥ 2 oder deren Anhydride und
a2) gegebenenfalls aromatische, cycloaliphatische und/oder aliphatische Monocarbonsäuren
mit
b) 51 bis 60 Mol-% einer Alkoholkomponente enthaltend
b1) ein oder mehrere aliphatische, cycloaliphatische und/oder araliphatische Polyole eines zahlenmittleren Molekulargewichts von 62 bis 272 g/mol sowie einer mittleren OH-Funktionalität ≥ 2 und
b2) gegebenenfalls aliphatische, cycloaliphatische und/oder araliphatische Monoalkohole,
B) einen oder mehrere gegenüber OH-Gruppen reaktive Vernetzer ausgewählt aus der Gruppe bestehend aus Phenolharzen, Aminoplastharzen, Benzguanidinharzen und Harnstoffharzen mit jeweils einer Funktionalität (bezogen auf OH-reaktive Gruppen) von ≥ 2,
C) Wasser,
D) Neutralisationsmitteln und
E) optional Lösemitteln, Hilfs- und Zusatzstoffen.

2. Wässrige Beschichtungsmittel gemäß Anspruch 1, **dadurch gekennzeichnet, dass** Komponente a1) aus einer oder mehreren Carbonsäuren bzw. -derivaten ausgewählt aus der Gruppe bestehend aus Phthalsäure, Isophthalsäure, Terephthalsäure, Trimellitsäure, Phthalsäureanhydrid, Trimellitsäureanhydrid, Pyromellitsäureanhydrid, Bernsteinsäure, Maleinsäure, Adipinsäure, Sebacinsäure, Dodecandisäure, dimerisierte Fettsäuren, Bernsteinsäureanhydrid, Maleinsäureanhydrid, 1,4-Cyclohexandicarbonsäure, Hexahydrophthalsäure und Hexahydrophthalsäureanhydrid besteht.

3. Wässrige Beschichtungsmittel gemäß Anspruch 1 oder 2, **dadurch gekennzeichnet, dass** Komponente a2) aus einer oder mehreren Monocarbonsäuren ausgewählt aus der Gruppe bestehend aus Essigsäure, Propionsäure, 1-Octansäure, 1-Decansäure, 1-Dodecansäure, 1-Octadecansäure, gesättigte und ungesättigte Fettsäuren und Benzoesäure besteht.

4. Wässrige Beschichtungsmittel gemäß einem der Ansprüche 1 bis 3, **dadurch gekennzeichnet, dass** Komponente b1) aus einem oder mehreren Polyolen ausgewählt aus der Gruppe bestehend aus Ethylenglykol, Diethylenglykol, Triethylenglykol, 1,2-Propandiol, 1,4-Butandiol, Neopentylglycol, 1,6-Hexandiol, Glycerin, Trimethylolpropan, Pentaerythrit und Sorbit besteht.

5. Wässrige Beschichtungsmittel gemäß einem der Ansprüche 1 bis 4, **dadurch gekennzeichnet, dass** Komponente b2) aus einem oder mehreren Monoalkoholen ausgewählt aus der Gruppe bestehend aus Methanol, Ethanol, 1-Propanol, 1-Butanol, 2-Butanol, Isobutanol, 1-Pentanol, 1-Hexanol, 2-Ethylhexanol, 1-Octanol, 1-Decanol, 1-Dodecanol, Butylglykol und Butyldiglykol besteht.

6. Verfahren zur Herstellung wässriger Beschichtungsmittel gemäß einem der Ansprüche 1 bis 5 durch Vermischen der Einzelkomponenten A) - E) miteinander, wobei zunächst A) gegebenenfalls in Anwesenheit von C) mit D) ganz oder teilweise neutralisiert wird bevor die Komponenten B), E) sowie restliche Mengen C) und D) zugegeben werden.

7. Verwendung wässriger Beschichtungsmittel gemäß einem der Ansprüche 1 bis 5 zur Herstellung von Beschichtungen.

8. Beschichtungen erhältlich aus wässrigen Beschichtungsmitteln gemäß einem der Ansprüche 1 bis 5.

9. Substrate beschichtet mit Beschichtungen gemäß Anspruch 8.

10. Metalldosen beschichtet mit Beschichtungen gemäß Anspruch 8.

## Claims

1. Aqueous coating compositions, containing
A) one or more water-thinnable polyester polyols with an OH value of 20 to 300 mg KOH/g and an acid value of 20 to 80 mg KOH/g obtainable by the reaction of
a) 49 to 40 mole % of a carboxylic acid component containing
a1) one or more aliphatic, cycloaliphatic, araliphatic and/or aromatic carboxylic acids having a COOH functionality of ≥2 or the anhydrides thereof and
a2) optionally aromatic, cycloaliphatic and/or aliphatic monocarboxylic acids
with
b) 51 to 60 mole % of an alcohol component containing
b1) one or more aliphatic, cycloaliphatic and/or araliphatic polyols having a number-average molecular weight of 62 to 272 g/mole and an average OH functionality of ≥2 and
b2) optionally aliphatic, cycloaliphatic and/or araliphatic monoalcohols,
B) one or more crosslinking agents that are reactive towards OH groups, selected from the group consisting of phenolic resins, amino resins, benzoguanidine resins and urea resins, each having a functionality (based on OH-reactive groups) of ≥2,
C) water,
D) neutralising agents and
E) optionally solvents, auxiliary substances and additives.

2. Aqueous coating compositions according to claim 1, **characterised in that** component a1) consists of one or more carboxylic acids or derivatives selected from the group consisting of phthalic acid, isophthalic acid, terephthalic acid, trimellitic acid, phthalic anhydride, trimellitic anhydride, pyromellitic anhydride, succinic acid, maleic acid, adipic acid, sebacic acid, dodecanedioic acid, dimerised fatty acids, succinic anhydride, maleic anhydride, 1,4-cyclohexanedicarboxylic acid, hexahydrophthalic acid and hexahydrophthalic anhydride.

3. Aqueous coating compositions according to claim 1 or 2, **characterised in that** component a2) consists of one or more monocarboxylic acids selected from the group consisting of acetic acid, propionic acid, 1-octanoic acid, 1-decanoic acid, 1-dodecanoic acid, 1-octadecanoic acid, saturated and unsaturated fatty acids and benzoic acid.

4. Aqueous coating compositions according to one of claims 1 to 3, **characterised in that** component b1) consists of one or more polyols selected from the group consisting of ethylene glycol, diethylene glycol, triethylene glycol, 1,2-propanediol, 1,4-butanediol, neopentyl glycol, 1,6-hexanediol, glycerol, trimethylolpropane, pentaerythritol and sorbitol.

5. Aqueous coating compositions according to one of claims 1 to 4, **characterised in that** component b2) consists of one or more monoalcohols selected from the group consisting of methanol, ethanol, 1-propanol, 1-butanol, 2-butanol, isobutanol, 1-pentanol, 1-hexanol, 2-ethylhexanol, 1-octanol, 1-decanol, 1-dodecanol, butyl glycol and butyl diglycol.

6. A process for the production of aqueous coating compositions according to one of claims 1 to 5, by mixing the individual components A) - E) together, A) first being completely or partially neutralised, optionally in the presence of C) and D), before the components B), E) and remaining quantities of C) and D) are added.

7. The use of aqueous coating compositions according to one of claims 1 to 5 for the production of coatings.

8. Coatings obtainable from aqueous coating compositions according to one of claims 1 to 5.

9. Substrates coated with coatings according to claim 8.

10. Metal cans coated with coatings according to claim 8.

## Revendications

1. Agents de revêtement aqueux contenant
A) un ou plusieurs polyesterpolyols pouvant être dilués avec de l'eau ayant un indice OH de 20 à 300 mg de KOH/g et un indice acide de 20 à 80 mg de KOH/g obtenus par réaction
a) de 49 à 40 % en mol d'un constituant d'acide carboxylique contenant
a1) un ou plusieurs acides carboxyliques aliphatiques, cycloaliphatiques, araliphatiques et/ou aromatiques d'une fonctionnalité COOH ≥ 2 ou des anhydrides de ceux-ci et
a2) éventuellement des acides monocarboxyliques aromatiques, cycloaliphatiques et/ou aliphatiques
avec
b) de 51 à 60 % en mol d'un constituant d'alcool contenant
b1) un ou plusieurs polyols aliphatiques, cycloaliphatiques et/ou araliphatiques d'un poids moléculaire moyen en nombre de 62 à 272 g/mol ainsi que d'une fonctionnalité OH moyenne ≥ 2 et
b2) éventuellement des monoalcools aliphatiques, cycloaliphatiques et/ou araliphatiques,
B) un ou plusieurs agents de réticulation réactifs par rapport aux groupes OH choisis parmi des résines phénoliques, des résines d'aminoplastes, des résines de benzoguanidine et des résines d'urée avec à chaque fois une fonctionnalité (rapportée aux groupes OH-réactifs) ≥ 2,
C) de l'eau,
D) des agents de neutralisation et
E) des solvants, des auxiliaires et des additifs facultatifs.

2. Agents de revêtement aqueux selon la revendication 1, **caractérisés en ce que** le constituant a1) est choisi parmi un ou plusieurs acides respectivement dérivés d'acides carboxyliques du groupe constitué de l'acide phtalique, l'acide isophtalique, l'acide téréphtalique, l'acide trimellitique, l'anhydride d'acide phtalique, l'anhydride d'acide trimellitique, l'anhydride d'acide pyromellitique, l'acide succinique, l'acide maléique, l'acide adipique, l'acide sébacique, le diacide dodécanique, des acides gras dimérisés, l'anhydride d'acide succinique, l'anhydride d'acide maléique, l'acide 1,4-cyclohexanedicarboxylique, l'acide hexahydrophtalique et l'anhydride d'acide hexahydrophtalique.

3. Agents de revêtement aqueux selon la revendication 1 ou 2, **caractérisés en ce que** le constituant a2) est choisi parmi un ou plusieurs acides monocarboxyliques du groupe constitué de l'acide acétique, l'acide propionique, l'acide 1-octanique, l'acide 1-décanique, l'acide 1-dodécanique, l'acide 1-octadécanique, des acides gras saturés et insaturés et l'acide benzoïque.

4. Agents de revêtement aqueux selon l'une quelconque des revendications 1 à 3, **caractérisés en ce que** le constituant b1) est choisi parmi un ou plusieurs polyols du groupe constitué de l'éthylèneglycol, du diéthylèneglycol, du triéthylèneglycol, du 1,2-propanediol, du 1,4-butanediol, du néopentylglycol, du 1,6-hexanediol, de la glycérine, du triméthylolpropane, du pentaérythritol et du sorbitol.

5. Agents de revêtement aqueux selon l'une quelconque des revendications 1 à 4, **caractérisés en ce que** le constituant b2) est choisi parmi un ou plusieurs monoalcools du groupe constitué du méthanol, de l'éthanol, du 1-propanol, du 1-butanol, du 2-butanol, de l'isobutanol, du 1-pentanol, du 1-hexanol, du 2-éthylhexanol, du 1-octanol, du 1-décanol, du 1-dodécanol, du butylglycol et du butyldiglycol.

6. Procédé pour la préparation d'agents de revêtement aqueux selon l'une quelconque des revendications 1 à 5 par mélange des constituants individuels A) - E) ensemble, dans lequel A) est tout d'abord totalement ou partiellement neutralisé éventuellement en présence de C) avec D) avant d'ajouter les constituants B), E) ainsi que les quantités restantes de C) et D).

7. Utilisation d'agents de revêtement aqueux selon l'une quelconque des revendications 1 à 5 pour la préparation de revêtements.

8. Revêtements obtenus à partir d'agents de revêtement aqueux selon l'une quelconque des revendications 1 à 5.

9. Substrats revêtus de revêtements selon la revendication 8.

10. Boîtes métalliques revêtues de revêtements selon la revendication 8.
